# EUROPÄISCHE PATENTANMELDUNG

(11) **EP 1 973 318 A2**
(43) Veröffentlichungstag der Anmeldung: **24.09.2008**
(21) Anmeldenummer: 08002922.6
(22) Anmeldetag: 18.02.2008
(51) Int. Cl.: H04M 1/738

(54) **Abschlusspunkt Linie im Teilnehmerbereich einer Telekommunikations- und/oder Datenverbindung und Verfahren zum Providerwechsel**

(30) Priorität: 09.03.2007 DE 102007011683
(71) Anmelder: ADC GMBH, 14167 Berlin (DE)
(72) Erfinder: Domeit, Jörg Dipl. Ing., 12307 Berlin (DE); Franzke, Jörg Dipl.-Ing., 13503 Berlin (DE)

(57) **Zusammenfassung**

Die Erfindung betrifft einen Abschlusspunkt Linie (1) im Teilnehmerbereich einer Telekommunikations- und/oder Datenverbindung, umfassend mindestens eine Einrichtung zum Anschließen von Teilnehmeranschlussleitungen, wobei der Abschlusspunkt Linie (1) mindestens zwei Einrichtungen für Teilnehmeranschlussleitungen von mindestens zwei Providern (a-c) umfasst, wobei jeweils eine Teilnehmeranschlussleitung der verschiedenen Provider (a-c) auf ein gemeinsames Schaltelement (6) mit mindestens zwei Eingängen (7a-c) geschaltet sind, wobei ein Ausgang (7d) des Schaltelementes (6) mit einem Teilnehmeranschluss (10) oder einer Einrichtung zum Anschluss von Teilnehmerleitungen verbunden ist, wobei jedes Schaltelement (6) mindestens einen Steuereingang (S) aufweist, mittels dessen einer der mindestens zwei Eingänge (7a-c) auf den Ausgang (7d) des Schaltelementes durchgeschaltet wird, sowie ein Verfahren zum Providerwechsel.

## Beschreibung

Die Erfindung betrifft einen Abschlusspunkt Linie im Teilnehmerbereich einer Telekommunikations- und/oder Datenverbindung und ein Verfahren zum Providerwechsel.

Am Abschlusspunkt Linie (APL) endet das Erdkabel von der Vermittlungsstelle als Teilnehmeranschlussleitung. Der Abschlusspunkt Linie (APL), auch CTP (Customer Termination Point) genannt, bildet den Abschluss des Zugangsnetzes und stellt die Schnittstelle zum Haus- oder Endleitungsnetz dar. Möchte nun ein Teilnehmer seinen Provider bzw. Anbieter wechseln, so wird hierzu in einer Vermittlungsstelle die zugehörige Leitung vom Hauptverteiler zu einem Kollokationsverteiler (Übergabeverteiler) des neuen Anbieters rangiert und von dort wieder zurück zur Teilnehmerseite eines Hauptverteilers. Von dort wird dann die Leitung in Form eines Kabels zu Kabelverzweigern und von dort letztendlich zum Abschlusspunkt Linie als Teilnehmeranschlussleitung geführt. Das beschriebene Verfahren ist relativ aufwendig, da häufig die Hauptverteiler des Netzbetreibers bzw. ursprünglichen Providers und die Kollokationsverteiler des neuen Providers nicht in unmittelbarer räumlicher Nähe angeordnet sind. Der Oberbegriff Kollokation beschreibt die gemeinsame Nutzung von festgelegten physikalischen und elektrischen Schnittstellen zweier Netzbetreiber innerhalb eines gemeinsamen Raumes. Im Hauptverteilerstandort des entsprechenden Anschlussbereiches werden Leitungswege an so genannte Übergabeverteiler abgeschlossen und den neuen Netzbetrieben (Providern) zur Verfügung gestellt. Diese können dann über eigene Leitungswege ihre Vermittlungsstellen an den Übergabeverteiler im Kollokationsraum anschließen.

Der Erfindung liegt daher das technische Problem zugrunde, einen Abschlusspunkt Linie im Teilnehmerbereich einer Telekommunikations- und/oder Datenverbindung sowie ein Verfahren zum Providerwechsel zu schaffen, mittels derer der Vorgang eines Providerwechsels vereinfacht wird.

Die Lösung des technischen Problems ergibt sich durch die Gegenstände mit den Merkmalen der Ansprüche 1 und 7. Weitere vorteilhafte Ausgestaltungen der Erfindung ergeben sich aus den Unteransprüchen.

Hierzu umfasst der Abschlusspunkt Linie im Teilnehmerbereich einer Telekommunikations- und/oder Datenverbindung mindestens zwei Einrichtungen zum Anschließen von Teilnehmeranschlussleitungen von mindestens zwei Providern, wobei jeweils eine Teilnehmeranschlussleitung der verschiedenen Provider auf ein gemeinsames Schaltelement mit mindestens zwei Eingängen geschaltet sind, wobei ein Ausgang des Schaltelementes mit einem Teilnehmeranschluss oder einer Einrichtung zum Anschluss von Teilnehmerleitungen verbunden ist, wobei jedes Schaltelement mindestens einen Steuereingang aufweist, mittels dessen einer der mindestens zwei Eingänge auf den Ausgang des Schaltelementes durchgeschaltet wird. Zum Wechseln des Providers wird ein Schaltbefehl generiert, mittels dessen der Ausgang des dem Teilnehmer zugeordneten Schaltelementes mit dem Eingang des gewünschten Providers verbunden wird. Hierdurch erfolgt der Wechsel einfach am Abschlusspunkt Linie, wobei keinerlei manuelle Umrangierungen notwendig sind. Dabei sind verschiedene Varianten möglich, wer den Umschaltbefehl auslöst bzw. generiert. So kann dieser von der Vermittlungsstelle, dem Teilnehmer oder einem Provider veranlasst werden. Hierzu muss dann nur ein sicherer Zugriff auf die Schaltelemente beispielsweise mittels einer Kodierung gewährleistet werden. Der Zugriff auf die Schaltelemente kann dabei leitungsgebunden oder über eine Luftschnittstelle erfolgen. Weiter kann der Abschlusspunkt Linie für Kupferadern und/oder Lichtwellenleiter ausgebildet sein. Vorzugsweise weist dabei jedes Schaltelement so viele Eingänge auf wie mögliche Provider vorhanden sind. Weiter vorzugsweise weist das Schaltelement eine Stellung auf, in der kein Eingang auf den Ausgang geschaltet ist.

In einer bevorzugten Ausführungsform sind die Steuereingänge der Schaltelemente mit einem Controller verbunden, wobei weiter vorzugsweise die Schaltelemente und der Controller auf einer gemeinsamen Leiterplatte und/oder in einem gemeinsamen Gehäuse angeordnet sind.

In einer weiteren bevorzugten Ausführungsform sind die Schaltelemente kaskadiert ausgebildet.

In einer weiteren bevorzugten Ausführungsform sind die Einrichtungen zum Anschließen der Teilnehmeranschlussleitungen und/oder die Einrichtung zum Anschluss von Teilnehmerleitungen als Anschlussblöcke für Kupfer-Doppeladern ausgebildet.

In einer weiteren bevorzugten Ausführungsform sind die Schaltelemente als Relais ausgebildet.

Die Erfindung wird nachfolgend anhand eines bevorzugten Ausführungsbeispiels näher erläutert. Die Fig. zeigen:
- Fig. 1: ein schematisches Blockschaltbild eines Abschlusspunktes Linie und
- Fig. 2: eine schematische Darstellung eines kaskadierten Schaltelementes.

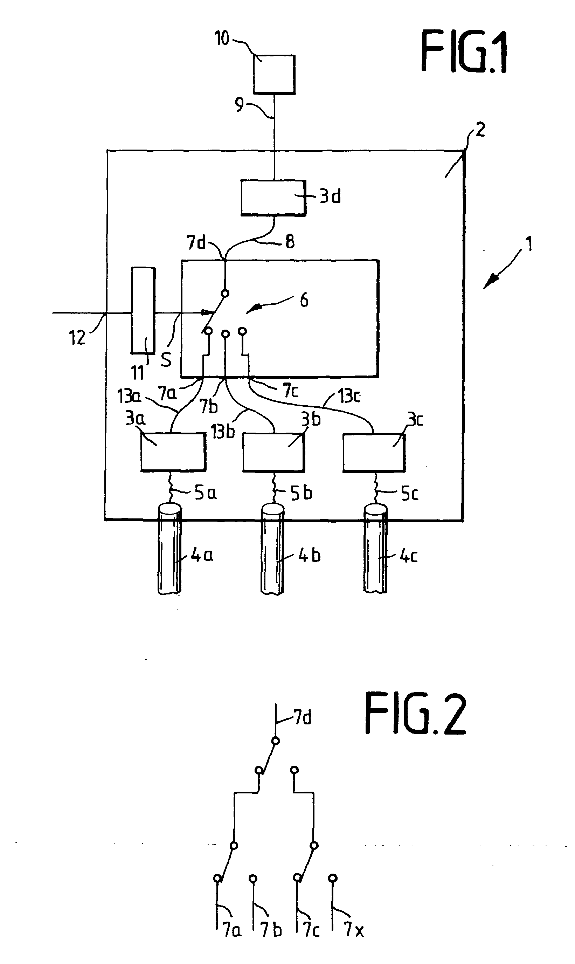

Der Abschlusspunkt Linie 1 umfasst ein Gehäuse 2, in dem Anschlussblöcke 3a-c angeordnet sind. Dabei sind die Anschlussblöcke 3a einem Provider a, die Anschlussblöcke 3b einem Provider b und die Anschlussblöcke 3c einem Provider c zugeordnet. Die Provider a-c führen jeweils Erdkabel 4a-c an den Abschlusspunkt Linie 1, von wo aus dann die Erdkabel 4a-c als Vielzahl von Doppeladern 5a-c auf die Anschlussblöcke 3a-c geschaltet bzw. terminiert werden. In der Fig. 1 ist aus Übersichtsgründen jeweils nur eine Doppelader 5a-c dargestellt. Dabei ist die Größe bzw. die Anzahl der Anschlussblöcke 3a-c derart gewählt, dass so viele Doppeladern 5a-c terminiert werden können wie Teilnehmer dem Abschlusspunkt Linie 1 zugeordnet sind. Die Doppeladern 5a-c stellen dabei die Teilnehmeranschlussleitungen dar. Des Weiteren umfasst der Abschlusspunkt Linie 1 eine Anzahl von Schaltelementen 6, wobei die Anzahl der Schaltelemente 6 der Anzahl von Teilnehmern entspricht. Die Schaltelemente 6 umfassen eine Anzahl von Eingängen 7a-c, die vereinfacht der Anzahl der Provider a-c entspricht. Aufgrund der Tatsache, dass Doppeladern 5a-c geschaltet werden, ist tatsächlich die Anzahl der Eingänge doppelt so groß, da das Schaltelement 6 die dargestellte Schaltung für jede Ader einer Doppelader 5a-c realisieren muss. Das Schaltelement 6 weist darüber hinaus einen Ausgang 7d auf, wobei auch hier wegen der Doppeladern gilt, dass jedes Schaltelement 6 eigentlich zwei Ausgänge 7d aufweist. Der Ausgang 7d ist dabei entweder mit einem Eingang 7a-c verbunden oder offen, d.h. mit keinem Eingang 7a-c verbunden.

Der Ausgang 7d ist dann über eine Doppelader 8 mit einem Anschlussblock 3d verbunden, der zum Terminieren von Teilnehmerleitungen 9 dient, die mit Teilnehmeranschlüssen 10 (beispielsweise eine TAE-Dose) verbunden sind. Das Schaltelement 6 weist mindestens einen Steuereingang S auf, der von einem Controller 11 angesteuert wird. Der Controller 11 verfügt des Weiteren über eine Schnittstelle 12, um Steuerinformationen zu empfangen und gegebenenfalls Statusinformationen zu senden. Über Rangier-Doppeladern 13a-c sind dann die Doppeladern 5a-c mit den Eingängen 7a-c der Schaltelemente 6 verbunden. Der Wechsel von einem Provider a zu einem anderen Provider b oder c erfolgt dann über einen Steuerbefehl des Controllers 11 am Steuereingang S, so dass der Ausgang 7d mit dem Eingang 7b oder 7c verbunden wird.

Ein bevorzugtes Anwendungsgebiet der Erfindung ist der Providerwechsel für Breitbanddienste. Um nun den Providern a-c die Möglichkeit zu geben, den Wechselwunsch eines Teilnehmers zu überprüfen, kann der Provider a-c den Status der Schaltelemente 6 abfragen, wobei dies vorzugsweise wie folgt beschränkt ist. So kann der Provider a abfragen, welche Teilnehmer mit seinen Doppeladern 5a verbunden sind und welche Teilnehmer mit keinem Provider verbunden sind. Erhält dann der Provider a einen Auftrag zum Wechseln von einem Teilnehmer, der bereits einen anderen Provider (z.B. b) hatte, so muss erst der Provider b seine Doppelader von Ausgang 7d wegschalten. Erst dann kann Provider a das Schaltelement 6 ansteuern und den Ausgang 7d mit dem Eingang 7a verbinden. Allerdings sind auch viele andere Konzepte denkbar.

In der Fig. 2 ist ein kaskadiertes Schaltelement 6 dargestellt. Dabei sind die Eingänge 7a, 7b einem Ausgang 7a,b und die Eingänge 7c und 7x einem Ausgang 7c,x zugeordnet, wobei die beiden Ausgänge 7a,b, 7c,x die Eingänge eines weiteren Schalters mit dem Ausgang 7d bilden. Insbesondere bei einer sehr großen Anzahl von Providern a-c ist eine derartige Kaskadierung vorteilhaft. Entsprechend müssen dann jedoch vom Controller 11 mehr Schaltbefehle generiert werden, im dargestellten Beispiel mindestens zwei.

### Bezugszeichenliste

- 1: Abschlusspunkt Linie
- 2: Gehäuse
- 3a-c: Anschlussblöcke
- 4a-c: Erdkabel
- 5a-c: Doppeladern
- 6: Schaltelement
- 7a-c,x: Eingänge
- 7a,b: Ausgang
- 7c,x: Ausgang
- 7d: Ausgang
- 8: Doppelader
- 9: Teilnehmerleitungen
- 10: Teilnehmeranschlüsse
- 11: Controller
- 12: Schnittstelle
- 13a-c: Rangier-Doppeladern
- a-c: Provider
- S: Steuereingang

## Patentansprüche

1. Abschlusspunkt Linie im Teilnehmerbereich einer Telekommunikations- und/oder Datenverbindung, umfassend mindestens eine Einrichtung zum Anschließen von Teilnehmeranschlussleitungen,
**dadurch gekennzeichnet, dass**
der Abschlusspunkt Linie (1) mindestens zwei Einrichtungen für Teilnehmeranschlussleitungen von mindestens zwei Providern (a-c) umfasst, wobei jeweils eine Teilnehmeranschlussleitung der verschiedenen Provider (a-c) auf ein gemeinsames Schaltelement (6) mit mindestens zwei Eingängen (7a-c) geschaltet sind, wobei ein Ausgang (7d) des Schaltelementes (6) mit einem Teilnehmeranschluss (10) oder einer Einrichtung zum Anschluss von Teilnehmerleitungen verbunden ist, wobei jedes Schaltelement (6) mindestens einen Steuereingang (S) aufweist, mittels dessen einer der mindestens zwei Eingänge (7a-c) auf den Ausgang (7d) des Schaltelementes durchgeschaltet wird.

2. Abschlusspunkt Linie nach Anspruch 1, **dadurch gekennzeichnet, dass** die Steuereingänge (S) der Schaltelemente (6) mit einem Controller (11) verbunden sind.

3. Abschlusspunkt Linie nach Anspruch 2, **dadurch gekennzeichnet, dass** der Controller (11) und die Schaltelemente (6) auf einer gemeinsamen Leiterplatte und/oder in einem gemeinsamen Gehäuse (2) angeordnet sind.

4. Abschlusspunkt Linie nach einem der vorangegangenen Ansprüche, **dadurch gekennzeichnet, dass** die Schaltelemente (6) kaskadiert ausgebildet sind.

5. Abschlusspunkt Linie nach einem der vorangegangenen Ansprüche, **dadurch gekennzeichnet, dass** die Einrichtung zum Anschließen der Teilnehmeranschlussleitungen und/oder die Einrichtung zum Anschluss von Teilnehmerleitungen als Anschlussblöcke (3a-d) für Kupfer-Doppeladern ausgebildet sind.

6. Anschlusspunkt Linie nach einem der vorangegangenen Ansprüche, **dadurch gekennzeichnet, dass** die Schaltelemente (6) als Relais ausgebildet sind.

7. Verfahren zum Providerwechsel mittels eines Abschlusspunktes Linie nach Anspruch 1, **dadurch gekennzeichnet, dass** ein Schaltbefehl generiert wird, mittels dessen der Ausgang (7d) des dem Teilnehmer zugeordneten Schaltelementes (6) mit dem Eingang (7a-c) des gewünschten Providers (a-c) verbunden wird.

8. Verfahren nach Anspruch 7, **dadurch gekennzeichnet, dass** der Schaltbefehl von dem Teilnehmer, der Vermittlungsstelle oder dem Provider generiert wird.
